# EUROPÄISCHE PATENTSCHRIFT

(11) **EP 3 615 401 B1**
(45) Veröffentlichungstag und Bekanntmachung des Hinweises auf die Patenterteilung: **28.07.2021**
(21) Anmeldenummer: 18716561.8
(22) Anmeldetag: 29.03.2018
(51) Int. Cl.: B62D 1/10, B62D 5/00

(54) **LENKUNGSHANDHABE**
STEERING HANDLE
MANETTE DE DIRECTION

(30) Priorität: 28.04.2017 DE 102017207272
(43) Veröffentlichungstag der Anmeldung: 04.03.2020
(73) Patentinhaber: Volkswagen Aktiengesellschaft, 38440 Wolfsburg (DE)
(72) Erfinder: WILSKE, Ernst, 39291 Nedlitz (DE); KLÜGEL, Mark, 38444 Wolfsburg (DE); JENKE, Klaas-Simon, 38106 Braunschweig (DE)
(86) Internationale Anmeldenummer: PCT/EP2018/058246
(87) Internationale Veröffentlichungsnummer: WO 2018/197153

(56) Entgegenhaltungen:
- EP-A1- 1 783 030
- DE-A1-102006 059 972
- FR-A1- 2 918 028
- JP-A- 2004 182 061
- US-A1- 2003 067 147

## Beschreibung

Die Erfindung bezieht sich auf eine Lenkungshandhabe zur Eingabe eines fahrerseitigen Lenkbefehls in eine Steer-by-wire-Fahrzeuglenkung mit einem um eine Drehachse (A) drehbar gelagerten Grundkörper zur Betätigung durch den Fahrer.

Bei Steer-by-wire-Fahrzeuglenkungen entfällt eine mechanische Verbindung zwischen einem Lenkrad und den gelenkten Fahrzeugrädern. Vielmehr dient die Lenkungshandhabe in einer solchen Fahrzeuglenkung als Eingabevorrichtung für einen fahrerseitigen Lenkbefehl, welcher mit geeigneten Sensoren erfasst wird. Mittels des Lenkbefehls - gegebenenfalls unter Berücksichtigung weiterer Fahrzeugparameter - und einer an den Fahrzeugrädern angreifenden Stelleinrichtung wird ein gewünschter Lenkwinkel an den gelenkten Fahrzeugrädern eingestellt. Aufgrund der fehlenden mechanischen Verbindung erfährt der Fahrer jedoch keine unmittelbare Rückmeldung von den Fahrzeugrädern her. Gleichwohl ist erwünscht, dem Fahrer auch bei einer Steer-by-wire-Fahrzeuglenkung ein Lenkgefühl zu vermitteln, das im Wesentlichen dem einer herkömmlichen Fahrzeuglenkung mit mechanischer Kopplung zwischen dem Lenkrad und den Fahrzeugrädern entspricht, d.h. der Fahrer beim Lenken einen fahrsituationsabhängigen Widerstand am Lenkrad spürt und letzteres zudem wieder in seine Geradausstellung zurückkehren kann.

Eine gattungsgemäße Lenkungshandhabe für eine Steer-by-wire-Fahrzeuglenkung ist aus DE 101 57 797 A1 bekannt. In DE 101 57 797 A1 wird vorgeschlagen, den Widerstand zum einen aktiv mittels eines Elektromotors bereitzustellen und zum anderen zusätzlich eine passive Einrichtung vorzusehen, welche ein weiteres Reaktionsmoment auf einen Lenkbefehl des Fahrers erzeugt. Dazu ist ein Grundkörper der Lenkungshandhabe mit einer Welle drehfest verbunden, die ihrerseits mit einem Rotor eines Elektromotors antriebsmäßig gekoppelt ist, wobei zwischen der Welle und dem Elektromotor ein Planetengetriebe zur Untersetzung der Drehzahl des Elektromotors angeordnet ist. Das Planetengetriebe sitzt an der dem Grundkörper abgewandten Seite des Elektromotors. In einem Bereich zwischen dem Grundkörper und dem Elektromotor ist die drehbare Welle an ihrem Außenumfang mit einem Gewinde versehen, das mit einer Kugelgewindemutter in Eingriff steht. Bei einer Drehbewegung des Grundkörpers und damit der Welle wird die Kugelgewindemutter gegen die Kraft von Rückstellfedern axial verlagert, um einen Gegenmoment für ein vom Fahrer am Grundkörper aufgebrachtes Handmoment zu erzeugen. Die passive Vorrichtung soll vor allem dazu dienen, bei einem Ausfall des Elektromotors weiterhin einen Widerstand zu erzeugen, um die Beherrschbarkeit des Fahrzeugs zu erleichtern.

Eine weitere gattungsgemäße Lenkungshandhabe für eine Steer-by-wire-Fahrzeuglenkung ist aus EP 1 783 030 A1 bekannt. Bei dieser sind ein Elektromotor und ein Getriebe an einer der Lenkungshandhabe abgewandten Seite eines Lenkstockschaltergehäuses angeordnet. Eine Rotorwelle verbindet das Getriebe durch das Lenkstockschaltergehäuse hindurch mit der Lenkungshandhabe.

Vor diesem Hintergrund liegt der Erfindung die Aufgabe zu Grunde, eine Lenkungshandhabe für eine Steer-by-wire-Fahrzeuglenkung zu schaffen, welche in Bezug auf die Positionierung im Fahrzeug einen größeren Spielraum ermöglicht.

Diese Aufgabe wird durch eine Lenkungshandhabe gemäß Patentanspruch 1 gelöst.

Aufgrund der Integration der Getriebestufe in den Grundkörper lässt sich eine sehr kompakte Bauweise erzielen, die für die Anordnung am Fahrzeug vielfältige Möglichkeiten eröffnet.

Die Lenkungshandhabe kann insbesondere als Baueinheit konfiguriert werden, welche je nach Bedarf mit einem Elektromotor und/oder einer elektrischen Bremseinrichtung zur Erzeugung eines Reaktionsmoments auf einen fahrerseitigen Lenkbefehl gekoppelt werden kann. Durch Schaffung einer Schnittstelle zwischen der Lenkungshandhabe, vorliegend zumindest dem Grundkörper und dem Getriebe, und dem Elektromotor lassen sich unterschiedliche Konzepte zur Erzeugung eines Widerstands bei Beibehaltung der Konfiguration der Lenkungshandhabe verwirklichen. Es ist jedoch auch möglich, einen Elektromotor und/oder eine elektrische Bremse mit den vorgenannten Komponenten zu einer Baueinheit zu vereinen, womit die Lenkungshandhabe dann auch den Elektromotor bzw. die elektrische Bremseinrichtung integriert.

Durch Verwendung eines hochuntersetzenden Getriebes, d.h. eines Getriebes mit einem Untersetzungsverhältnis i im Bereich zwischen 25 und 60 unmittelbar am Grundkörper ist es möglich, einen besonders kompakten Elektromotor einzusetzen, wodurch der fahrzeugseitige Bauraumbedarf besonders klein bleibt.

Vorteilhafte Ausgestaltungen der Erfindung sind Gegenstand weiterer Patentansprüche.

Das Getriebe kann praktisch im Bereich einer Lenkradnabe untergebracht werden. In einer vorteilhaften Ausgestaltung der Erfindung ist dementsprechend vorgesehen, dass die Aufnahme für das Getriebe an einen an dem Grundkörper ausgebildeten topfförmigen Abschnitt zur Aufnahme eines Airbags anschließt.

In einer weiteren vorteilhaften Ausgestaltung der Erfindung ist das Getriebe, insbesondere das Ausgangsglied desselben, relativ zu dem Grundkörper verdrehbar. Hierzu ist es insbesondere möglich, das Getriebe in der Aufnahme drehbar an dem Grundkörper anzuordnen und/oder zu lagern, um die relative Verdrehbarkeit sicher und dauerhaft zu gewährleisten.

Weiterhin kann der Grundkörper über eine Drehfedereinrichtung mit dem Ausgangsglied des Getriebes gekoppelt sein. Über eine solche Drehfedereinrichtung ist es möglich, einen Drehstab in einer Lenksäule einer herkömmlichen Fahrzeuglenkung mit mechanischen Durchgriff zu simulieren, um so das Lenkgefühl einer herkömmlichen Lenkung noch besser nachzuempfinden.

Für eine besonders kompakte Bauweise und Unterbringung in dem Grundkörper kann die Drehfedereinrichtung in Ringnuten aufgenommene Federelemente aufweisen, welche jeweils mit einem Endabschnitt am Grundkörper und mit einem weiteren Endabschnitt am Ausgangsglied des Getriebes abgestützt sind.

Ein fahrerseitiger Lenkbefehl kann beispielsweise mittels eines Drehwinkelsensors und/oder eines Momentensensors erfasst werden. Vorzugsweise kann dazu ähnlich wie bei einem Drehstab in einer herkömmlichen Lenkung die elastische Verformung der Drehfedereinrichtung genutzt werden. In einer Ausführungsvariante der vorliegenden Erfindung kann daher zwischen dem Grundkörper und dem Ausgangsglied des Getriebes ein Drehwinkelsensor zur Erfassung der Relativverdrehung zwischen dem Grundkörper und dem Ausgangsglied des Getriebes angeordnet sein. Alternativ oder ergänzend kann mit einem Momentensensor ein anliegendes Moment erfasst werden.

In einer weiteren vorteilhaften Ausgestaltung ist das Eingangsglied des Getriebes mit einem Elektromotor und/oder einer elektrischen Bremseinrichtung gekoppelt, um einen haptischen Widerstand gegen einen vom Fahrer am Grundkörper aufgebrachten Lenkbefehl zu erzeugen.

Weiterhin ist es möglich, das Getriebe mit einer zentralen Durchgangsöffnung auszuführen, durch welche sich eine stationäre Welle erstreckt, die in Einbaulage drehfest mit einem Fahrzeugaufbau gekoppelt ist. Über eine solche stationäre Welle lässt sich gegebenenfalls eine stationäre Nabe der Lenkungshandhabe realisieren. So kann beispielsweise eine Prallfläche der Lenkungshandhabe feststehend ausgeführt werden, gegenüber welcher sich der Grundkörper, über welchen der Fahrer einen Lenkbefehl eingibt, drehen kann. Dies ermöglicht einen größeren Gestaltungsspielraum beispielsweise für die Unterbringung eines Airbags und von Bedienungselementen und/oder Anzeigeinstrumenten, wie beispielsweise einen Monitor oder einen Touchscreen für den Fahrer.

Die stationäre Welle kann insbesondere als Hohlwelle ausgeführt sein, um zu ermöglichen, beispielsweise elektrische Leitungen zum Grundkörper zu führen.

Weiterhin kann der Elektromotor als Hohlwellenmotor ausgeführt sein, so dass die stationäre Welle sich auch durch diesen hindurcherstrecken kann.

In einer weiteren Ausführungsvariante weist das Ausgangsglied des Getriebes einen Hülsenabschnitt auf, welcher sich in oder durch das Eingangsglied des Getriebes erstreckt und an der stationären Welle drehbar gelagert ist. Dies ermöglicht eine stabile Lagerung des Getriebes und des Grundkörpers.

Zudem kann am Außenumfang des Hülsenabschnitts eine Gewindespindel ausgebildet sein, welche mit einem Gleitkörper in Gewindeeingriff steht, der - beispielsweise mit seinem Außenumfang - an einer stationären Hülse geführt ist. Hierdurch kann für Drehwinkel von mehr als 360° aus der Geradausstellung ein Lenkanschlag breitgestellt werden, mit dem der maximale Drehwinkel des Grundkörpers begrenzt wird.

Weiterhin ist es möglich, die stationäre Welle an einem Halter zu befestigen, über welchen die Lenkungshandhabe an einem Fahrzeugaufbau befestigbar ist, wobei der Elektromotor und/oder die elektrische Bremseinrichtung an dem Halter abgestützt sind und die stationäre Welle sich durch den Elektromotor und/oder die elektrische Bremseinrichtung hindurch erstreckt. Hierdurch wird eine Baueinheit geschaffen, welche ein herkömmliches Lenkrad einer Fahrzeuglenkung mit mechanischen Durchgriff simulieren kann.

Die Lenkungshandhabe einschließlich Elektromotor und/oder elektrischer Bremseinrichtung kann an einem Halter abgestützt sein, der seinerseits schwenkbewegbar und/oder translatorisch verlagerbar am Fahrzeugaufbau angeordnet ist, wobei die Schwenkbewegtheit und/oder translatorische Verlagerbarkeit manuell oder aktuatorisch mittels eines Antriebs bewerkstelligbar ist. Dies gestattet Verstellmöglichkeiten ähnlich einem herkömmlichen Lenkrad. Insbesondere ist es möglich, eine Lenkungshandhabe der vorstehend erläuterten Art an einem herkömmlichen Verstellmechanismus anzubringen, welcher dann gegebenenfalls auch als Halter für die Lenkungshandhabe dienen kann.

Gemäß einer weiteren vorteilhaften Ausgestaltung der Erfindung ist das am Grundkörper positionierte Getriebe ein Umlaufrädergetriebe, welches derart integriert ist, dass ein Planetenträger des Getriebes an der stationären Welle festgelegt ist.

Vorzugsweise dient in einem solchen Fall das Sonnenrad des Umlaufrädergetriebes Eingangsglied des Getriebes, welches mit einem Rotor eines Elektromotors gekoppelt ist. Das Außenrad des Umlaufrädergetriebes bildet dann das Ausgangsglied, welches mit dem Grundkörper, gegebenenfalls unter Zwischenschaltung des Drehstabsimulators, gekoppelt ist.

Nachfolgend wird die Erfindung anhand von in der Zeichnung dargestellten Ausführungsbeispielen näher erläutert. Die Zeichnung zeigt in:
- Figur 1: eine schematische Darstellung eines ersten Ausführungsbeispiels einer Lenkungshandhabe nach der Erfindung,
- Figur 2: eine Lenkungshandhabe nach einem zweiten Ausführungsbeispiel,
- Figur 3: einen Längsschnitt durch die Lenkungshandhabe gemäß Figur 2,
- Figur 4: eine Ansicht des Nabenbereichs der Lenkungshandhabe gemäß Figur 2 aus der Richtung eines Fahrers gesehen,
- Figur 5: eine Längsschnittansicht einer Lenkungshandhabe nach einem dritten Ausführungsbeispiel,
- Figur 6: eine Längsschnittansicht einer Lenkungshandhabe nach einem vierten Ausführungsbeispiel, und in
- Figur 7: eine Ansicht der Lenkungshandhabe gemäß Figur 6 aus der Richtung eines Fahrers gesehen.

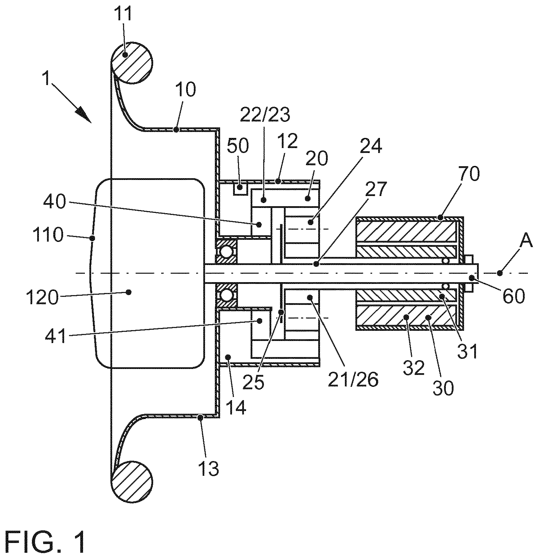

Das erste Ausführungsbeispiel in Figur 1 zeigt eine Lenkungshandhabe 1 für eine Steer-by-wire-Fahrzeuglenkung, über welche ein Fahrer einen Lenkbefehl eingeben kann, um an einem Kraftfahrzeug einen gewünschten Lenkwinkel für die gelenkten Fahrzeugräder einzustellen.

Die Lenkungshandhabe 1 weist einen Grundkörper 10 zur Betätigung durch den Fahrer auf, welcher um eine Drehachse A am Kraftfahrzeug drehbar angeordnet ist. Der Grundkörper 10 kann als Lenkrad ausgeführt sein, jedoch auch eine von herkömmlichen Lenkrädern abweichende Formgebung besitzen. Vorliegend weist der Grundkörper 10 einen Greifbereich 11 auf, den der Fahrer zum Lenken mit seinen Händen greifen kann.

Weiterhin ist an dem Grundkörper 10 eine Aufnahme 12 ausgebildet, in welcher ein nachfolgend näher erläutertes Getriebe 20 angeordnet ist. Die Aufnahme 12 kann zylindrisch ausgebildet sein und schließt vorzugsweise rückseitig an einen topfförmigen Abschnitt 13 des Grundkörpers 10 an, in dem ein Airbag 120 sowie gegebenenfalls zusätzliche Bedienungselemente und Anzeigeinstrumente für den Fahrer untergebracht werden können. Die Bedienungselemente und Anzeigeinstrumente können einen Monitor oder Touchscreen 110 umfassen.

Das Getriebe 20 koppelt den Grundkörper 10 mit einem Elektromotor 30, welcher dazu dient, bei der Beaufschlagung des Grundkörpers 10 mit einem fahrerseitigen Lenkbefehl ein Lenkgefühl hervorzurufen, wie es von herkömmlichen Fahrzeuglenkungen mit mechanischen Durchgriff vom Lenkrad zu den Fahrzeugrädern bekannt ist.

Das Getriebe 20 weist ein Eingangsglied 21 auf, welches mit einem Rotor 31 des Elektromotors 30 gekoppelt ist. Weiterhin weist das Getriebe 20 ein Ausgangsglied 22 auf, das mit dem Grundkörper 10 gekoppelt ist.

Das Getriebe 20 kann vorzugsweise als ein hochuntersetzendes Getriebe mit einem Übersetzungsverhältnis im Bereich von 25 bis 60 ausgeführt sein, welches die Drehzahl des Elektromotors 30 reduziert. Es ist vorliegend platzsparend im Nabenbereich 14 des Grundkörpers 10 angeordnet.

Zum Zweck der Veranschaulichung ist in Figur 1 beispielhaft ein Getriebe 20 in Form eines Umlaufrädergetriebes dargestellt. Dieses weist ein Außenrad 23 auf, welches gleichzeitig das grundkörperseitige Ausgangsglied 22 darstellt. Das Außenrad 23 kämmt mit einem oder mehreren Planetenrädern 24, welche an einem stationären Planetenträger 25 jeweils drehbar gelagert sind. Die Planetenräder 24 kämen ihrerseits mit einem Sonnenrad 26, welches gleichzeitig das mit dem Elektromotor 30 gekoppelte Eingangsglied 21 des Getriebes 20 darstellt.

Prinzipiell kann das Ausgangsglied 22 des Getriebes 20 drehfest mit dem Grundkörper 10 verbunden sein. Bei dem dargestellten Ausführungsbeispiel ist jedoch zwischen dem Ausgangsglied 22 und dem Grundkörper 10 zusätzlich eine Drehfedereinrichtung 40 zur Drehmomentübertragung eingegliedert. Sie ist somit mechanisch in Reihe zu dem Getriebe 20 geschaltet. Die Drehfedereinrichtung 40 simuliert den bei einer herkömmlichen Fahrzeuglenkung mit mechanischen Durchgriff vorhandenen Dreh- bzw. Torsionsstab in der Lenksäule. Die Drehfedereinrichtung 40 ist innerhalb des Grundkörpers 10 aufgenommen und weist ein oder mehrere Federelemente 41 auf, welche jeweils mit einem Endabschnitt gegen den Grundkörper 10 und mit einem weiteren Endabschnitt gegen das Ausgangsglied 22 des Getriebes 20 abgestützt sind. Die Drehfedereinrichtung 40 weist eine Drehsteifigkeit im Bereich von 0,5 bis 2 Nm/Grad Drehwinkel auf.

Ein Drehwinkelsensor 50 erfasst die Relativverdrehung zwischen dem Grundkörper 10 und dem Ausgangsglied 22 des Getriebes 20 und übermittelt ein entsprechendes Signal an eine nicht näher dargestellte Steuereinrichtung, in welcher unter Berücksichtigung weiterer Fahrzeugparameter der an den gelenkten Fahrzeugrädern einzustellende Lenkwinkel ermittelt wird. Zudem kann in der gleichen oder einer weiteren Steuereinrichtung unter Berücksichtigung der solchermaßen erfassten Relativverdrehung sowie gegebenenfalls weiterer Fahrzeugparameter eine Vorgabe für die Ansteuerung des Elektromotors 30 erzeugt werden, durch welche die Rückwirkung der Fahrzeuglenkung an der Lenkungshandhabe 1 simuliert wird. Das Ausmaß der Lenkübersetzung, der maximale Drehwinkel sowie die Härte der Lenkung, welche dem Fahrer mittels der Lenkungshandhabe 1 vermittelt werden, lassen sich softwaretechnisch beeinflussen.

Insbesondere kann für den Fahrer auch einen Wahlmöglichkeit für unterschiedliche Kennungen der Lenkung geschaffen werden, die beispielsweise in einer Steuereinrichtung vorgehalten werden. Hierdurch kann der Fahrer beispielsweise zwischen einem sportlicheren oder komfortableren Lenkgefühl wählen. Die Auswahl kann mittels einer im Bedienumfeld des Fahrers angeordneten Eingabeeinrichtung erfolgen. Zudem können in der Steuereinrichtung Algorithmen zur einer automatischen Wahl der Kennung vorhanden sein.

Somit kann durch eine Auswahl des Fahrers die Steuereinrichtung der Lenkungshandhabe 1 verschiedene Kennlinien darstellen. Der Fahrer kann auf diese Weise zum Beispiel zwischen sportlichem und komfortablem Lenkgefühl wählen.

Anstelle eines Drehwinkelsensors 50 kann auch ein Momentensensor vorgesehen werden, dessen Signal an die Steuereinrichtung übermittelt wird. Es ist ferner möglich, beispielsweise zum Zweck der Verifikation oder aus Redundanzgründen beide Typen von Sensoren einzusetzen.

Anstelle oder zusätzlich zu dem Elektromotor 30 kann ferner eine elektrische Bremseinrichtung zur Erzeugung eines haptischen Widerstand vorgesehen sein.

Bei dem in Figur 1 dargestellten Ausführungsbeispiel weist das Getriebe 20 eine zentrale Durchgangsöffnung 27 auf, durch welche sich eine stationäre Welle 60, die beispielsweise als Hohlwelle ausgeführt sein kann, erstreckt. Die stationäre Welle 60 ist drehfest am Fahrzeugaufbau befestigt und kann dazu verwendet werden, die vorstehend genannten Komponenten drehbar zu lagern.

Vorliegend ist die Welle 60 an einem Halter 70 befestigt, an dem auch ein Stator 32 des Elektromotors 30 festgelegt ist. Über den Halter 70 kann die Lenkungshandhabe 1 an einem Verstellmechanismus angeordnet werden, welcher beispielsweise ein Verschwenken der Drehachse A relativ zum Kraftfahrzeug sowie ferner eine Verlagerung in Richtung der Drehachse A gestattet.

Die Welle 60 erstreckt sich durch den Rotor 31 des Elektromotors 30 hindurch. Durch die Welle 60 können ein am Grundkörper 10 angeordneter Airbag sowie weitere Bedienungselemente elektrisch angeschlossen werden.

Da die Welle 60 sich durch das Getriebe 20 hindurch bis in den Grundkörper 10 erstrecken kann, ist es möglich, den Airbag sowie die Bedienungselemente und Anzeigeinstrumente an der Welle 60 abzustützen, so dass diese bei einem Drehen des Grundkörpers 10 nicht mitdrehen, sondern stets in der gleichen Position verbleiben.

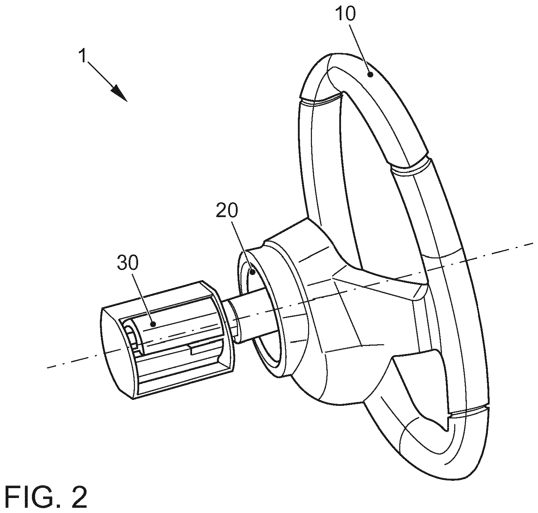

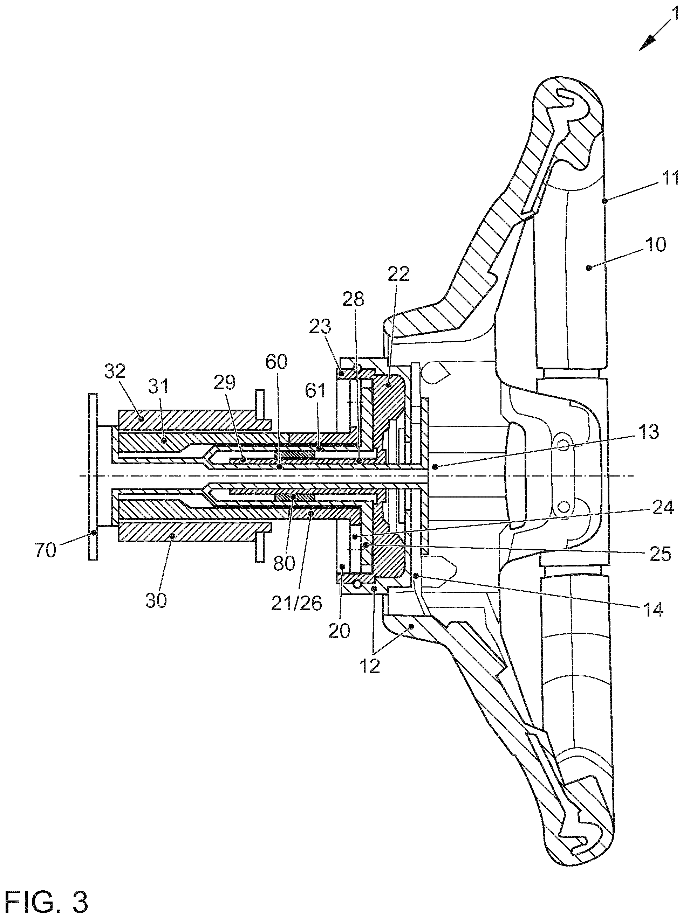

Die Figuren 2 bis 4 zeigen eine Lenkungshandhabe 1 für eine Steer-by-wire-Fahrzeuglenkung nach einem zweiten Ausführungsbeispiel, mit dem das vorstehend erläuterte Konzept in einem kompakten Lenkaktuator umgesetzt wird, welcher Drehwinkel um die Drehachse A von mehr als 360° jede Drehrichtung aus einer Ausgangslage für die Geradeausfahrt ermöglicht.

Die Lenkungshandhabe 1 weist wiederum einen Grundkörper 10 auf, welcher durch einen Fahrer um die Drehachse A gedreht werden kann, um einen fahrerseitigen Lenkbefehl zu erzeugen.

Der Grundkörper 10 bildet in einem Nabenbereich 14 um die Drehachse A eine vorzugswiese zylindrisch ausgebildete Aufnahme 12 aus, in welcher, wie oben bereits erwähnt, ein vorzugsweise hochuntersetzendes Getriebe 20 angeordnet ist. Die Aufnahme 12 schließt rückseitig an einen Abschnitt 13 des Grundkörpers 10 an, der als Aufnahme für einen Airbag und/oder Bedienungselemente für den Fahrer dient.

Das Getriebe 20 weist wiederum ein Eingangsglied 21, das mit einem Rotor 31 eines Elektromotors 30 antriebsmäßig gekoppelt ist, und ein Ausgangsglied 22, das mit dem Grundkörper 10 antriebsmäßig gekoppelt ist, auf.

Das Ausgangsglied 22 kann über ein Lager in der Aufnahme 12 um die Drehachse A drehbar am Grundkörper 10 abgestützt sein.

Obwohl nicht dargestellt, kann zusätzlich oder anstatt des Elektromotors 30 eine elektrische Bremseinrichtung vorgesehen sein.

In Figur 1 ist beispielhaft ein hochuntersetzendes Getriebe 20 in Form eines Umlaufrädergetriebes dargestellt. Dieses weist als Ausgangsglied 22 ein Außenrad 23 auf, welches mit einem oder mehreren Planetenrädern 24 kämmt. Das bzw. die Planetenräder 24 sind an einem feststehenden Planetenträger 25 drehbar gelagert, welcher sich an einer stationären Welle 60 abstützt. Das bzw. die Planetenräder 24 kämen ihrerseits mit einem Sonnenrad 26, das als Eingangsglied 21 des Getriebes 20 mit dem Rotor 31 des Elektromotors 30 gekoppelt ist.

Das Ausgangsglied 22 des Getriebes 20 weist vorliegend einen Hülsenabschnitt 28 auf, welcher sich in oder durch das Eingangsglied 21 des Getriebes 20 erstreckt und an der stationären Welle drehbar 60 gelagert ist. Am Außenumfang des Hülsenabschnitts 28 ist eine Gewindespindel 29 ausgebildet. Diese Gewindespindel 29 steht mit einem Gleitkörper 80 in Gewindeeingriff, der, beispielsweise mit seinem Außenumfang, an einer stationären Hülse 61 geführt ist und dessen Verschiebungsweg entlang der Gewindespindel 29 begrenzt ist. Hierdurch wird ein mechanischer Endanschlag für den maximalen Drehwinkel des Grundkörpers 10 aus der Ausgangsstellung geschaffen. Die stationäre Hülse 61 kann an der stationären Welle 60 ausgebildet oder befestigt sein.

Zwischen dem Ausgangsglied 22 und dem Grundkörper 10 ist eine Drehfedereinrichtung 40 zur Drehmomentübertragung eingegliedert, so dass der Grundkörper 10, die Drehfedereinrichtung 40 und das Getriebe 20 in Bezug auf die Übertragung eines Drehmoments mechanisch in Reihe geschaltet sind.

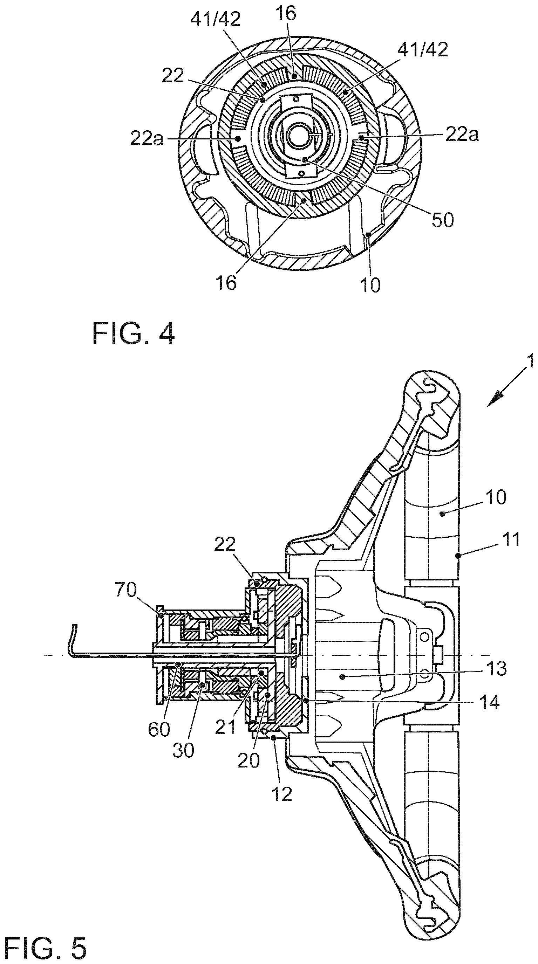

Die Drehfedereinrichtung 40 ist innerhalb des Grundkörpers 10 aufgenommen und weist ein oder mehrere Federelemente 41 auf, welche jeweils mit einem Endabschnitt gegen den Grundkörper 10 und mit einem weiteren Endabschnitt gegen das Ausgangsglied 22 des Getriebes abgestützt sind. Figur 4 zeigt beispielhaft mehrere Schraubenfedern 42, welche in entsprechenden Ringnuten 15 aufgenommen sind und sich gegen Vorsprünge 16 am Grundkörper und korrespondierende Vorsprünge 22a am Ausgangsglied 22 des Getriebes 20 abstützen

Ein Drehwinkelsensor 50 erfasst die Relativverdrehung zwischen dem Grundkörper 10 und dem Ausgangsglied 22 des Getriebes 20 und übermittelt ein entsprechendes Signal an eine nicht näher dargestellte Steuereinrichtung zur Einstellung eines Lenkwinkels an den Fahrzeugrädern sowie zur Ansteuerung des Elektromotors 30 und/oder einer elektrischen Bremseinrichtung, wie dies oben bereits erläutert wurde.

Der Elektromotor 30 ist an einem Halter 70 befestigt, über welchen die Lenkungshandhabe 1 an einem Verstellmechanismus angebracht werden kann, der ein Verschwenken der Drehachse A der Lenkungshandhabe 1 sowie ferner eine Verlagerung in Richtung der Drehachse A ermöglicht.

Die stationäre Welle 60 ist an dem Halter 70 festgelegt und erstreckt sich durch den als Hohlwellenmotor ausgebildeten Elektromotor 30 hindurch sowie vorzugsweise bis in den Grundkörper 10, wie dies oben bereits im Zusammenhang mit Figur 1 erläutert wurde.

In Figur 5 ist beispielhaft ein drittes Ausführungsbeispiel dargestellt, welches eine Abwandlung der vorgenannten Ausführungsbeispiele darstellt. Entsprechende Bauteile sind folglich mit den gleichen Bezugszeichen versehen. Im Unterschied zu dem zweiten Ausführungsbeispiel entfällt hier die Spindelverlängerung des Ausgangsglieds 22 des Getriebes 20, wodurch sich eine etwas kürzere Baulänge in Richtung der Drehachse A ergibt. Dies eignet sich insbesondere für Lenkungshandhaben 1, bei denen die maximalen Drehwinkel aus der Ausgangsstellung in beide Drehrichtungen kleiner als 180° bleiben sollen. Zudem ist eine andere Variante eines Elektromotors 30 dargestellt. Aufgrund der unmittelbaren Anordnung des Elektromotors 30 am Getriebe 20 kann Deckel des Getriebes 20 gegebenenfalls einstückig mit einem Gehäuse 33 des Elektromotors 30 ausgeführt sein.

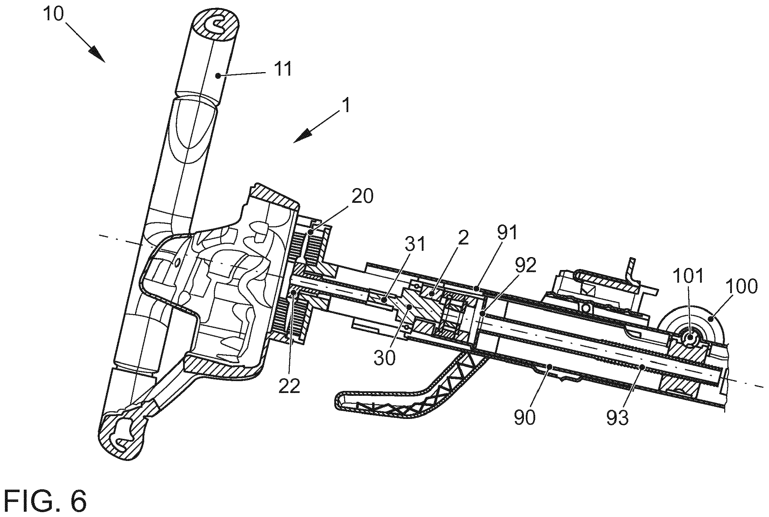

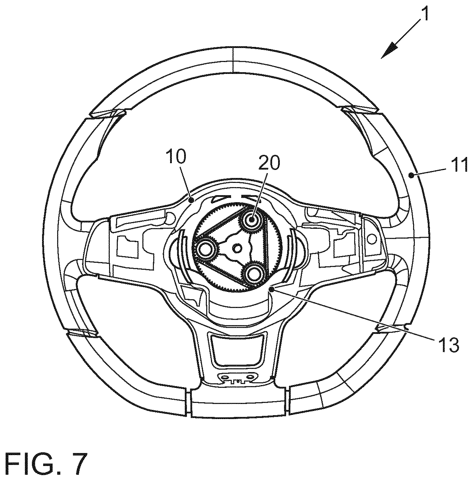

Figur 6 und 7 zeigen ein viertes Ausführungsbeispiel einer Lenkungshandhabe 1 zur Veranschaulichung weiterer Abwandlungsmöglichkeiten sowie zur Darstellung eines Verstellmechanismus 90 für die Lenkungshandhabe 1. Gleiche Bauteile wie oben sind auch hier wieder mit den gleichen Bezugszeichen versehen.

Der Verstellmechanismus 90 ermöglicht eine Schwenkbewegbarkeit der Lenkungshandhabe 1 sowie eine translatorische Verlagerbarkeit derselben im Wesentlichen in Richtung der Drehachse A. Dabei kann die translatorische Verlagerbarkeit mittels eines weiteren Elektromotors 100 bewerkstelligt werden. Die Lenkungshandhabe 1 ist mit ihrem motorseitigen Endabschnitt 2 in eine Hülse 91 eingeführt und an einem verlagerbaren Schlitten 92 befestigt. Der Schlitten 92 ist mit einer Spindel oder Zahnstange 93 verbunden, welche durch ein am weiteren Elektromotor 100 vorgesehenes Antriebsritzel 101 relativ zu Hülse 91 verstellt werden kann.

Weiterhin ist in dem vierten Ausführungsbeispiel anstelle eines Umlaufrädergetriebes ein Cyclobelt-Getriebe als Getriebe 20 am Grundkörper 10 angeordnet. Dessen Getriebeausgangsglied 22 ist wiederum mit einem Rotor 31 des Elektromotors 30 verbunden, während das Getriebeeingangsglied 21 mit dem Grundkörper 10 entweder direkt oder unter Zwischenschaltung einer Drehfedereinrichtung gekoppelt ist. Anstelle eines Cyclobelt-Getriebes kann beispielsweise auch ein Exzentergetriebe zum Einsatz kommen.

Weiterhin und unabhängig von den obigen Ausführungen wird hiermit eine Lenkungshandhabe 1 zur Eingabe eines fahrerseitigen Lenkbefehls in eine Steer-by-wire-Fahrzeuglenkung offenbart, wobei diese Lenkungshandhabe 1 eine feststehende Nabe mit einem relativ hierzu drehbaren Greifabschnitt 11 aufweist. An der feststehenden Nabe ist ein Monitor oder Touchscreen 110 angeordnet. Der Monitor oder Touchscreen 110 kann beispielsweise ein flexibles OLED Display sein. Die Nabe kann eine Prallfläche für den Fahrer sein. Unter dem Monitor oder Touchscreen 110 kann ein Airbag 120 angeordnet sein. Eine solche Lenkungshandhabe 1 kann wie vorstehend erläutert und/oder in den Ansprüchen angegeben fortgebildet werden.

Die Erfindung ist ausdrücklich nicht auf die beschriebenen Ausführungsbeispiele und Abwandlungen beschränkt, sondern umfasst mindestens alle durch die Patentansprüche definierten Ausgestaltungen.

### Bezugszeichenliste

- 1: Lenkungshandhabe
- 2: Endabschnitt
- 10: Grundkörper
- 11: Greifabschnitt
- 12: Aufnahme
- 13: Abschnitt zur Aufnahme eines Airbags
- 14: Nabenbereich
- 15: Ringnut
- 16: Vorsprung
- 20: Getriebe
- 21: Eingangsglied
- 22: Ausgangsglied
- 22a: Vorsprung
- 23: Außenrad
- 24: Planetenrad
- 25: Planetenträger
- 26: Sonnenrad
- 27: Durchgangsöffnung
- 28: Hülsenabschnitt
- 29: Gewindespindel
- 30: Elektromotor
- 31: Rotor
- 32: Stadttor
- 33: Gehäuse
- 40: Drehfedereinrichtung
- 41: Federelement
- 42: Schraubenfeder
- 50: Drehwinkelsensor
- 60: stationäre Welle
- 61: stationäre Hülse
- 70: Halter
- 80: Gleitelement
- 90: Verstellmechanismus
- 91: Hülse
- 92: Schlitten
- 93: Zahnstange oder Spindel
- 100: weiterer Elektromotor
- 101: Ritzel
- 110: Monitor oder Touchscreen
- 120: Airbag
- A: Drehachse

## Patentansprüche

1. Lenkungshandhabe (1) zur Eingabe eines fahrerseitigen Lenkbefehls in eine Steer-by-wire-Fahrzeuglenkung, umfassend einen um eine Drehachse (A) drehbar gelagerten Grundkörper (10) zur Betätigung durch den Fahrer,
**dadurch gekennzeichnet, dass**
an dem Grundkörper (10) in einem Nabenbereich (14) um die Drehachse (A) eine Aufnahme (12) ausgebildet ist,
wobei ein Getriebe (20) mit einem Eingangsglied (21) und einem Ausgangsglied (22) in der an dem Grundkörper (10) ausgebildeten Aufnahme (12) angeordnet ist,
wobei das Eingangsglied (21) des Getriebes (20) mit einem Elektromotor (30) koppelbar ist und
das Ausgangsglied (22) des Getriebes (20) mit dem Grundkörper (10) gekoppelt ist.

2. Lenkungshandhabe nach Anspruch 1, **dadurch gekennzeichnet, dass** die Aufnahme (12) für das Getriebe (20) an einen an dem Grundkörper (10) ausgebildeten topfförmigen Abschnitt (13) zur Aufnahme eines Airbags anschließt.

3. Lenkungshandhabe nach Anspruch 1 oder 2, **dadurch gekennzeichnet, dass** das Getriebe (20) drehbar in der Aufnahme (12) des Grundkörper (10) angeordnet ist.

4. Lenkungshandhabe nach einem der Ansprüche 1 bis 3, **dadurch gekennzeichnet, dass** der Grundkörper (10) über eine Drehfedereinrichtung (40) mit dem Ausgangsglied (22) des Getriebes (20) gekoppelt ist.

5. Lenkungshandhabe nach Anspruch 4, **dadurch gekennzeichnet, dass** die Drehfedereinrichtung (40) in Ringnuten (16) aufgenommene Federelemente (41, 42) aufweist, welche jeweils mit einem Endabschnitt am Grundkörper (10) und mit einem weiteren Endabschnitt am Ausgangsglied (22) des Getriebes (20) abgestützt sind.

6. Lenkungshandhabe nach einem der Ansprüche 1 bis 5, **dadurch gekennzeichnet, dass** zwischen dem Grundkörper (10) und dem Ausgangsglied (22) des Getriebes (20) zur Erfassung der Relativverdrehung zwischen dem Grundkörper (10) und dem Ausgangsglied (22) des Getriebes (20) ein Drehwinkelsensor (50) und/oder ein Momentensensor angeordnet ist.

7. Lenkungshandhabe nach einem der Ansprüche 1 bis 6, **dadurch gekennzeichnet, dass** das Getriebe (20) eine zentrale Durchgangsöffnung (27) aufweist, durch welche sich eine stationäre Welle (60) erstreckt, die in Einbaulage drehfest mit einem Fahrzeugaufbau gekoppelt ist.

8. Lenkungshandhabe nach einem der Ansprüche 1 bis 7, **dadurch gekennzeichnet, dass** das Eingangsglied (21) des Getriebes (20) mit einem Elektromotor (30) und/oder einer elektrischen Bremseinrichtung gekoppelt ist, um einen haptischen Widerstand gegen einen vom Fahrer am Grundkörper (10) aufgebrachten Lenkbefehl zu erzeugen.

9. Lenkungshandhabe nach einem der Ansprüche 1 bis 8, **dadurch gekennzeichnet, dass** das Ausgangsglied (22) des Getriebes (20) einen Hülsenabschnitt (28) aufweist, welcher sich in oder durch das Eingangsglied (21) des Getriebes (20) erstreckt und an der stationären Welle (60) drehbar gelagert ist.

10. Lenkungshandhabe nach Anspruch 9, **dadurch gekennzeichnet, dass** am Außenumfang des Hülsenabschnitts (28) eine Gewindespindel (29) ausgebildet ist, welche mit einem Gleitkörper (80) in Gewindeeingriff steht, der an einer stationären Hülse (61) geführt ist.

11. Lenkungshandhabe nach einem der Ansprüche 7 bis 10, **dadurch gekennzeichnet, dass** die stationäre Welle (60) an einem Halter (70) befestigt ist, über welchen die Lenkungshandhabe an einem Fahrzeugaufbau befestigbar ist, wobei der Elektromotor (30) und/oder die elektrische Bremse an dem Halter (70) abgestützt sind und die stationäre Welle (60) sich durch den Elektromotor (30) und/oder die elektrische Bremse hindurch erstreckt.

12. Lenkungshandhabe nach einem der Ansprüche 1 bis 10, **dadurch gekennzeichnet, dass** diese einschließlich des Elektromotors (30) und/oder der elektrischen Bremseinrichtung an einem Halter (70) abgestützt ist, der seinerseits schwenkbewegbar und/oder translatorisch verlagerbar am Fahrzeugaufbau angeordnet ist, wobei die Schwenkbewegtheit und/oder translatorische Verlagerbarkeit manuell oder aktuatorisch mittels eines Antriebs (100) bewerkstelligbar ist.

13. Lenkungshandhabe nach einem der Ansprüche 7 bis 12, **dadurch gekennzeichnet, dass** das Getriebe (20) ein Umlaufrädergetriebe ist und ein Planetenträger (25) des Getriebes an der stationären Welle (60) festgelegt ist und/oder ein Sonnenrad (26) des Umlaufrädergetriebes als Eingangsglied (21) des Getriebes (20) mit einem Rotor (31) des Elektromotors (30) gekoppelt ist.

14. Lenkungshandhabe nach einem der Ansprüche 7 bis 13, **dadurch gekennzeichnet, dass** ein Airbag (120) und/oder Bedienelemente für einen Fahrer mit der stationären Welle (60) drehfest verbunden sind.

15. Lenkungshandhabe nach einem der Ansprüche 1 bis 14, **dadurch gekennzeichnet, dass** eine Steuereinrichtung vorgesehen ist, in welcher unterschiedliche Kennungen für die Lenkung vorgehalten werden, welche durch den Fahrer wählbar oder durch einen Auswahlalgorithmus automatisch wählbar sind.

16. Lenkungshandhabe nach einem der Ansprüche 1 bis 15, **dadurch gekennzeichnet, dass** diese eine feststehende Nabe mit einem relativ hierzu drehbaren Greifabschnitt (11) aufweist und an der feststehenden Nabe ein Monitor oder Touchscreen (110) angeordnet ist.

## Claims

1. Steering handle (1) for the input of a driver-side steering command into a steer-by-wire vehicle steering system, comprising a main body (10) which is mounted such that it can be rotated about a rotational axis (A) for the actuation by way of the driver,
**characterized in that**
a receptacle (12) is configured around the rotational axis (A) on the main body (10) in a hub region (14),
a transmission (20) with an input member (21) and an output member (22) being arranged in the receptacle (12) which is configured on the main body (10),
it being possible for the input member (21) of the transmission (20) to be coupled to an electric motor (30), and
the output member (22) of the transmission (20) being coupled to the main body (10).

2. Steering handle according to Claim 1, **characterized in that** the receptacle (12) for the transmission (20) adjoins a pot-shaped section (13) which is configured on the main body (10) for receiving an airbag.

3. Steering handle according to Claim 1 or 2, **characterized in that** the transmission (20) is arranged rotatably in the receptacle (12) of the main body (10).

4. Steering handle according to one of Claims 1 to 3, **characterized in that** the main body (10) is coupled via a torsion spring device (40) to the output member (22) of the transmission (20).

5. Steering handle according to Claim 4, **characterized in that** the torsion spring device (40) has spring elements (41, 42) which are received in annular grooves (16) and are supported in each case by way of one end section on the main body (10) and by way of a further end section on the output member (22) of the transmission (20) .

6. Steering handle according to one of Claims 1 to 5, **characterized in that** a rotary angle sensor (50) and/or a torque sensor are/is arranged between the main body (10) and the output member (22) of the transmission (20) for the detection of the relative rotation between the main body (10) and the output member (22) of the transmission (20).

7. Steering handle according to one of Claims 1 to 6, **characterized in that** the transmission (20) has a central through opening (27), through which a stationary shaft (60) extends which, in the installed position, is coupled fixedly to a vehicle body for conjoint rotation.

8. Steering handle according to one of Claims 1 to 7, **characterized in that** the input member (21) of the transmission (20) is coupled to an electric motor (30) and/or an electric braking device, in order to generate haptic resistance against a steering command which is applied by the driver to the main body (10).

9. Steering handle according to one of Claims 1 to 8, **characterized in that** the output member (22) of the transmission (20) has a sleeve section (28) which extends in or through the input member (21) of the transmission (20) and is mounted rotatably on the stationary shaft (60) .

10. Steering handle according to Claim 9, **characterized in that** a threaded spindle (29) is configured on the outer circumference of the sleeve section (28), which threaded spindle (29) is in threaded engagement with a sliding body (80) which is guided on a stationary sleeve (61) .

11. Steering handle according to one of Claims 7 to 10, **characterized in that** the stationary shaft (60) is fastened to a holder (70), via which the steering handle can be fastened to a vehicle body, the electric motor (30) and/or the electric brake being supported on the holder (70), and the stationary shaft (60) extending through the electric motor (30) and/or the electric brake.

12. Steering handle according to one of Claims 1 to 10, **characterized in that** it, including the electric motor (30) and/or the electric braking device, is supported on a holder (70) which for its part is arranged on the vehicle body such that it can be moved in a pivoting manner and/or can be moved in a translational manner, it being possible for the pivoting movement and/or translational movement capability to be brought about manually or by actuator by means of a drive (100).

13. Steering handle according to one of Claims 7 to 12, **characterized in that** the transmission (20) is an epicyclic gear mechanism, and a planetary carrier (25) of the transmission is fixed on the stationary shaft (60), and/or a sun gear (26) of the epicyclic gear mechanism is coupled as input member (21) of the transmission (20) to a rotor (31) of the electric motor (30) .

14. Steering handle according to one of Claims 7 to 13, **characterized in that** an airbag (120) and/or operating elements for a driver are/is connected fixedly to the stationary shaft (60) for conjoint rotation.

15. Steering handle according to one of Claims 1 to 14, **characterized in that** a control device is provided, in which different characteristic values for the steering system are held available, which characteristic values can be selected by way of the driver or can be selected automatically by way of a selection algorithm.

16. Steering handle according to one of Claims 1 to 15, **characterized in that** it has a stationary hub with a gripping section (11) which can be rotated relative to the said stationary hub, and a monitor or touchscreen (110) is arranged on the stationary hub.

## Revendications

1. Manette de direction (1) pour l'entrée d'une commande de braquage d'un conducteur dans une direction à commande électrique(« steer by wire »), comportant un corps de base (10) monté rotatif autour d'un axe de rotation (A),
**caractérisée en ce**
**qu'**un logement (12) est réalisé sur le corps de base (10) dans une région de moyeu (14) autour de l'axe de rotation (A),
une transmission (20) comportant un organe d'entrée (21) et un organe de sortie (22) étant disposée dans le logement (12) réalisé sur le corps de base (10),
l'organe d'entrée (21) de la transmission (20) pouvant être accouplé à un moteur électrique (30) et
l'organe de sortie (22) de la transmission (20) étant accouplé au corps de base (10).

2. Manette de direction selon la revendication 1, **caractérisée en ce que** le logement (12) pour la transmission (20) est adjacent à une partie (13) en forme de pot réalisée sur le corps de base (10) pour le logement d'un sac gonflable.

3. Manette de direction selon la revendication 1 ou 2, **caractérisée en ce que** la transmission (20) est disposée de manière rotative dans le logement (12) du corps de base (10).

4. Manette de direction selon l'une des revendications 1 à 3, **caractérisée en ce que** le corps de base (10) est accouplé à l'organe de sortie (22) de la transmission (20) par le biais d'un dispositif de ressort de torsion (40) .

5. Manette de direction selon la revendication 4, **caractérisée en ce que** le dispositif de ressort de torsion (40) comprend des éléments ressorts (41, 42) logés dans des rainures annulaires (16), lesquels éléments ressorts sont supportés respectivement par une partie d'extrémité sur le corps de base (10) et par une autre partie d'extrémité sur l'organe de sortie (22) de la transmission (20).

6. Manette de direction selon l'une des revendications 1 à 5, **caractérisée en ce qu'**un capteur d'angle de rotation (50) et/ou un capteur de couple sont disposés entre le corps de base (10) et l'organe de sortie (22) de la transmission (20) pour la détection de la rotation relative entre le corps de base (10) et l'organe de sortie (22) de la transmission (20).

7. Manette de direction selon l'une des revendications 1 à 6, **caractérisée en ce que** la transmission (20) comprend une ouverture de passage centrale (27) à travers laquelle un arbre fixe (60) s'étend, lequel est accouplé de manière bloquée en rotation à une carrosserie de véhicule dans la position d'installation.

8. Manette de direction selon l'une des revendications 1 à 7, **caractérisée en ce que** l'organe d'entrée (21) de la transmission (20) est accouplé à un moteur électrique (30) et/ou à un dispositif de freinage électrique, afin de générer une résistance haptique vis-à-vis d'une commande de braquage appliquée par le conducteur sur le corps de base (10).

9. Manette de direction selon l'une des revendications 1 à 8, **caractérisée en ce que** l'organe de sortie (22) de la transmission (20) comprend une partie douille (28), laquelle s'étend dans ou à travers l'organe d'entrée (21) de la transmission (20) et est montée rotative sur l'arbre fixe (60).

10. Manette de direction selon la revendication 9, **caractérisée en ce qu'**une broche filetée (29) est réalisée sur la périphérique extérieure de la partie douille (28), laquelle broche est en prise par filetage avec un corps de glissement (80) qui est guidé sur une douille fixe (61).

11. Manette de direction selon l'une des revendications 7 à 10, **caractérisée en ce que** l'arbre fixe (60) est fixé à un dispositif de retenue (70) par le biais duquel la manette de direction peut être fixée à une carrosserie de véhicule, le moteur électrique (30) et/ou le frein électrique étant supportés sur le dispositif de retenue (70) et l'arbre fixe (60) s'étendant à travers le moteur électrique (30) et/ou le frein électrique.

12. Manette de direction selon l'une des revendications 1 à 10, **caractérisée en ce que** celle-ci, y compris le moteur électrique (30) et/ou le dispositif de freinage électrique, est supportée sur un dispositif de retenue (70) qui est disposé pour sa part de manière mobile en pivotement et/ou déplaçable en translation sur la carrosserie de véhicule, la mobilité en pivotement et/ou la capacité de déplacement en translation pouvant être réalisées manuellement ou par actionneur au moyen d'un entraînement (100).

13. Manette de direction selon l'une des revendications 7 à 12, **caractérisée en ce que** la transmission (20) est une transmission planétaire et un porte-satellites (25) de la transmission est assujetti à l'arbre fixe (60) et/ou un pignon planétaire (26) de la transmission planétaire est accouplé en tant qu'organe d'entrée (21) de la transmission (20) à un rotor (31) du moteur électrique (30).

14. Manette de direction selon l'une des revendications 7 à 13, **caractérisée en ce qu'**un sac gonflable (120) et/ou des éléments de commande pour un conducteur sont reliés de manière bloquée en rotation à l'arbre fixe (60).

15. Manette de direction selon l'une des revendications 1 à 14, **caractérisée en ce qu'**un dispositif de commande est prévu, dans lequel différentes caractéristiques pour la direction sont stockées, lesquelles peuvent être sélectionnées par le conducteur ou peuvent être sélectionnées automatiquement par un algorithme de sélection.

16. Manette de direction selon l'une des revendications 1 à 15, **caractérisée en ce que** celle-ci comprend un moyeu fixe doté d'une partie de préhension (11) rotative par rapport à celui-ci et un écran ou écran tactile (110) est disposé sur le moyeu fixe.
